# EUROPEAN PATENT SPECIFICATION

(11) **EP 1 643 668 B1**
(45) Date of publication and mention of the grant of the patent: **11.04.2007**
(21) Application number: 05255876.4
(22) Date of filing: 22.09.2005
(51) Int. Cl.: H04B 10/18, H04J 14/02

(54) **Method and apparatus for dispersion management in optical communication systems**
Verfahren und Vorrichtung zur Dispersionsverwaltung in optischen Nachrichtensystemen
Dispositif et procédé de gestion de la dispersion dans des systèmes de communication optique

(30) Priority: 30.09.2004 US 955230
(43) Date of publication of application: 05.04.2006
(73) Proprietor: LUCENT TECHNOLOGIES INC., Murray Hill, New Jersey 07974-0636 (US)
(72) Inventor: Fishman, Daniel A., Lakewood, New Jersey 08701 (US); Liu, Xiang, Marlboro, New Jersey 07746 (US); Wei, Xing, New Providence, New Jersey 07974 (US); Ying, Jinpin, East Brunswick, New Jersey 08816 (US)
(74) Representative: Sarup, David Alexander

(56) References cited:
- US-A1- 2001 028 759
- US-A1- 2002 149 818
- US-A1- 2003 103 265
- US-A1- 2004 126 114

## Description

### TECHNICAL FIELD

The present invention relates to optical communications, and more particularly to dispersion compensation for high spectral-efficiency wavelength division multiplexed (WDM) optical communication systems.

### BACKGROUND OF THE INVENTION

Dispersion management is important for high-speed (e.g., 10-Gb/s and above) WDM optical transmission systems to reduce the penalties resulting from chromatic dispersion and fiber nonlinearity. To reduce the nonlinear penalty due to inter-channel cross-phase-modulation (XPM), some amount of residual chromatic dispersion per transmission span (RDPS), after compensation by a dispersion-compensating fiber (DCF), is usually needed.

Long-haul (LH) and ultra-long-haul (ULH) optical networks are becoming more and more transparent with each signal channel originating and terminating almost anywhere in the network. Re-configurable optical add/drop multipliers (R-OADMs) are widely used to add channels into and drop channels off from the network. This can cause widely varying accumulated dispersions for signals traveling through different transmission paths in a network (i.e. different paths => different distances => different accumulated dispersion) and thus requires receivers to have large tunable dispersion compensation capability.

While widely tunable dispersion compensators (TDCs) are becoming available for 10-Gb/s signal transmission, commercially viable solutions are not available for 40-Gb/s signal transmission. In addition, the cost of a TDC increases quickly with an increase of its tunability range. Consequently, TDCs with a wide tunable range (required for 40-Gb/s signal transmission) can be prohibitively expensive.

Currently, there is a trend toward "converged" transmission platforms that supports both 10-Gb/s and 40-Gb/s signal transmissions. However, the dominating nonlinear penalties for transmission over 10-Gb/s channels are usually different from those over 40-Gb/s channels, and the dispersion map for systems transmitting 10-Gb/s signals may not be suitable for systems transmitting 40-Gb/s signals. Therefore, there is a challenge to find a suitable dispersion management scheme (or dispersion map) that fulfils the following requirements:
(1) Small distance-dependent dispersion accumulation (to reduce the range of the received dispersion, particularly in a transparent network);
(2) High tolerance to nonlinear effects for transmission over both 10-Gb/s and 40-Gb/s channels;
(3) Capable of supporting high spectral-efficiency (SE) WDM transmissions.

Solutions have been proposed for systems that support both 10-Gb/s and 40-Gb/s channels with 50-GHz channel spacing, and for dispersion management schemes using periodic-group-delay (PGD) dispersion-compensation modules (DCMs) to mitigate inter-channel XPM penalties. (*See* U.S. Pat. App. Publication No. 20040126114, entitled "Dispersion Compensation Method And Apparatus", filed 12/30/2002, and U.S. Pat. App. Publication No. 20050281295, entitled "Optical Add/Drop Multiplexer Having An Alternated Channel Configuration", filed 06/01/04). However, the useful bandwidth of the proposed PGD-DCMs is usually limited (e.g. to approximately half of the channel spacing). This bandwidth limitation essentially prevents operating such a system at high SE (e.g., SE of about 0.4), and is therefore incompatible with platforms that support both 10-Gb/s and 40-Gb/s channels with 50-GHz channel spacing.

United States Patent Application Publication 20020149818 teaches an optical device for wave synthesizing/separation that includes a branching filter which separates wavelength division multiplexed signal into first wavelength groups and second wavelength groups consisting of wavelength groups which do not come into contact with the wavelength groups making up the first wavelength groups, on the wavelength axis; a functional circuit that functionally processes the wavelength groups on a wavelength group-by-group basis of the separated first wavelength groups and second wavelength groups; and a multiplexer connected to the branching filter through the functional circuit, for synthesizing the separated first wavelength groups and second wavelength groups.

### SUMMARY OF THE INVENTION

The present invention provides a dispersion compensation method and apparatus employing interleavers and periodic-group-delay dispersion compensation modules (PGD-DCMs). The dispersion compensation method and apparatus allow for high-SE WDM transmission, and effectively eliminate distance-dependent dispersion accumulation. Using PGD-DCMs in accordance with the invention, inter-channel XPM (an important nonlinear penalty for 10-Gb/s channels) and intra-channel four-wave-mixing (IFWM) (a key nonlinear penalty for 40-Gb/s channel) are significantly reduced.

Dispersion management using dispersion compensator apparatus in accordance with the present invention is an attractive solution for high-SE WDM systems with different data rates (e.g., 10-Gb/s and 40-Gb/s) because it offers a relatively simple, cost-effective dispersion management solution with good transmission performance.

In one preferred embodiment the dispersion compensator apparatus includes a first interleaver for de-interleaving even and odd channels of a WDM signal onto a first output port and a second output port. A first DCM is coupled to the first output port, and a second DCM is coupled to the second output port. At least one of the DCMs is a periodic-group-delay (PGD) DCM for providing dispersion compensation for one or more of the even or odd channels of the WDM signal. A second interleaver is coupled to the DCMs for interleaving even and odd channels of the WDM signal.

### BRIEF DESCRIPTION OF THE DRAWINGS

The foregoing summary, as well as the following detailed description of preferred embodiments of the invention, will be better understood when read in conjunction with the appended drawings. For the purpose of illustrating the invention, there is shown in the drawings embodiments that are presently preferred. It should be understood, however, that the invention is not limited to the precise arrangements and instrumentalities shown.

In the drawings:
Fig. 1 shows a block diagram of a WDM optical communication network, in which the present invention can be practiced;
Fig. 2 is a block diagram of an apparatus according to one embodiment of the present invention;
Fig. 3 is a plot graphically illustrating the group delay properties of PGD-DCMs that can be used with embodiments of the invention;
Fig. 4 is a plot graphically illustrating the accumulated dispersion in a transmission link that implements multiple dispersion compensator apparatus in accordance with embodiments of the invention;
Fig. 5 is a plot graphically illustrating the relative time delay between two adjacent channels in a transmission link that implements multiple dispersion compensator apparatus in accordance with embodiments of the invention;
Figs. 6 A-C are the simulated eye diagrams for dense WDM optical transmission over 4000 km of 10 Gbit/s return-to-zero (RZ) on-off-keyed (OOK) optical signals for three different dispersion maps;
Figs. 7 A-D are simulated eye diagrams for dense WDM optical transmission over 4000 km of 10 Gbit/s RZ-OOK optical signals for RPDS = 20 ps/nm (Figs. 7 A, B) and for RPDS = 30 ps/nm (Figs. 7 C, D) for a typical dispersion-managed soliton (DMS) dispersion map (Figs. 7 A, C), and a dispersion map in accordance with aspects of the invention (Figs. 7 B, D);
Figs. 8 A-C are simulated eye diagrams for dense WDM optical transmission over 1600 km of 40 Gbit/s carrier-suppressed RZ (CSRZ) on-off-keyed (OOK) optical signals for three different dispersion maps;
Fig. 9 is a block diagram of another embodiment of an apparatus according to the present invention, which includes a polarization controller (PC); and
Fig. 10 is an optical-add-drop-multiplexer apparatus according to another embodiment of the present invention.

### DETAILED DESCRIPTION

The following acronyms are used herein:
- DCF: dispersion-compensating fiber
- DCM: dispersion compensation module
- DMS: dispersion-managed soliton
- DPSK: differential phase-shift-keyed
- D_{PGD-DCM}: dispersion provided by the PGD-DCM
- Dₚᵣₑ: pre-dispersion compensation
- D_{RX}: overall dispersion at a receiver
- EDFA: erbium-doped fiber amplifier
- LH: long haul
- NRZ: non-return-to-zero
- OADM: optical add/drop multiplexer
- OOK: on-off keying
- PC: polarization controller
- PGD: periodic-group-delay
- RDPS: residual dispersion per transmission span after compensation by a DCF
- RZ: return-to-zero
- SE: spectral-efficiency
- TDC: tunable dispersion compensator
- WDM: wavelength division multiplexing (or multiplexed)
- XPM: cross phase modulation
- IFWM: intra-channel four-wave-mixing

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments.

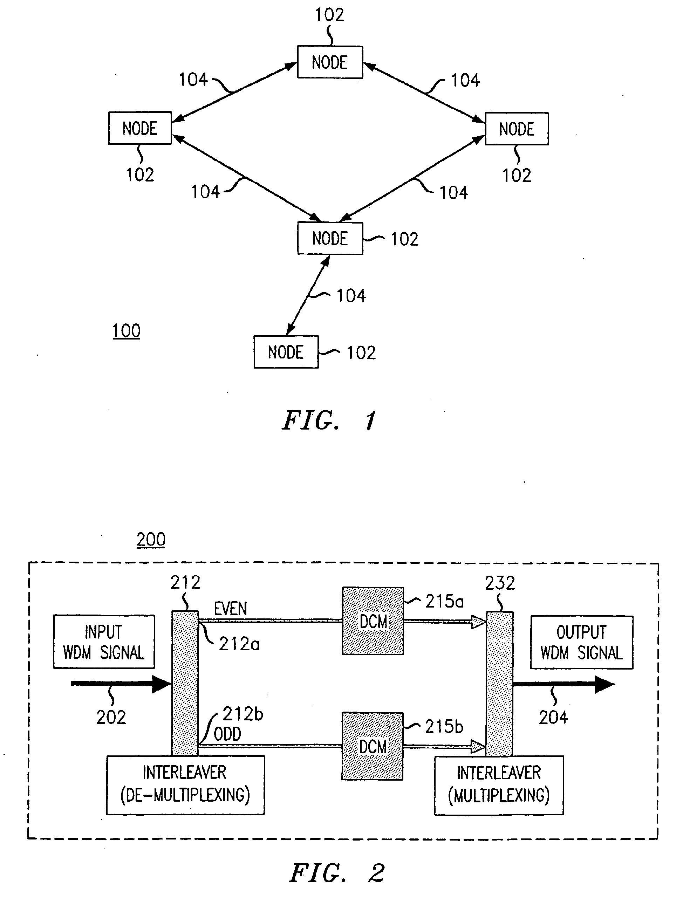

Fig. 1 shows a block diagram of an optical communication system 100, in which the present invention can be practiced. System 100 has a network of nodes 102 coupled by bi-directional links 104, where each of the nodes is adapted to process optical signals carried via the links 104. Signal processing at each node 102 includes, but is not limited to, routing optical signals between adjacent nodes, extracting (i.e., dropping) from the network traffic optical signals designated for local receivers, and inserting (i.e., adding) into the network traffic optical signals generated by local transmitters. Each link 104 may include one or more optical fibers, optical amplifiers (not shown), signal regenerators (not shown), and other customary components.

Fig. 2 shows a block diagram of a dispersion compensator apparatus 200 according to one embodiment of the invention. The apparatus 200 comprises a first interleaver 212 for de-interleaving even and odd channels of a WDM signal 202 onto a first output port 212a and a second output port 212b, respectively. The even and odd channels are offset in frequency by the minimum channel spacing of channels of the WDM signal 202.

A first dispersion compensation module (DCM) 215a is coupled to the first output port 212a, and a second DCM 215b is coupled to the second output port 212b. The pass-band center frequencies of the first DCM 215a are preferably aligned with the center frequencies of the even channels. Similarly, the pass-band center frequencies of the second DCM 215b are preferably aligned with the center frequencies of the odd channels.

Preferably, at least one of the first DCM 215a and the second DCM 215b is a periodic-group-delay (PGD) DCM for providing dispersion compensation for one or more of the even or odd channels of the WDM signal 202. Where the first DCM 215a and the second DCM 215b are both PGD-DCMs, the DCMs 215a, 215b preferably have substantially the same period (in the frequency domain) and their passbands are offset by about one-half of the period.

The PGD-DCMs (e.g. DCM 215a and/or DCM 215b) are preferably Gires-Tournois reflective etalon filter based devices, all-pass ring resonator filter based devices, waveguide grating router based devices, or devices that use virtually imaged phased arrays. Alternatively, a conventional DCF-based DCM can be used in place of one of the DCMs 215a, 215b.

Those skilled in the art will appreciate that one or both of the DCMs 215a, 215b may be integrated with one or both of the first interleaver 212 and the second interleaver 232. The integrated apparatus (not shown) would provide both group-delay ripple compensation and dispersion compensation. For example, several etalon-based dispersion compensators can be connected with the output ports and/or input port of an interleaver to achieve the needed group-delay and dispersion compensations.

A second interleaver 232 is coupled to the first and second DCMs 215a, 215b for interleaving the even and odd channels of the WDM signal 202 to generate an output WDM signal 204.

The WDM signal 202 may include channels with a bit rate of 10 Gb/s, and channels with a bit rate of 40 Gb/s. The channel spacing of the 10 Gb/s channels and the 40 Gb/s channels is about 50 GHz and about 100 GHz, respectively. The WDM signal 202 may have an RZ or NRZ transmission format, and an OOK or DPSK modulation format.

In one embodiment of an optical transmission system according to the invention a plurality of dispersion compensator apparatus as discussed above with reference to Fig. 2, are employed for distributed dispersion compensation at a plurality of "DCM nodes" (i.e. nodes with dispersion compensator apparatus) in the transmission system.

Each dispersion compensator apparatus in a DCM node is preferably adapted to compensate for the dispersion accumulated in a transmission link between that DCM node and a previous DCM node. More preferably, each dispersion compensator apparatus fully compensates for the accumulated dispersion in the transmission link between the DCM nodes.

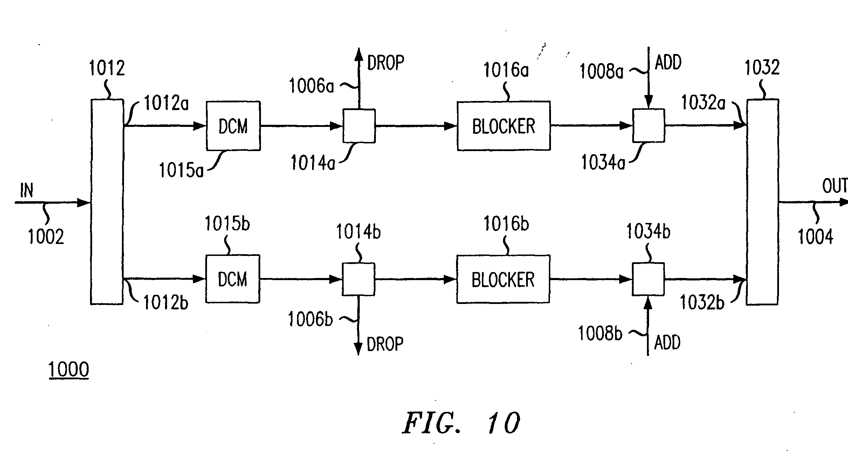

Those skilled in the art will appreciate that one or more of the DCM nodes may be an OADM node wherein the dispersion compensator apparatus is integrated into an OADM, as discussed below with reference to Fig. 10.

The optical transmission system may further comprise one or more pre-dispersion compensator(s) for providing pre-dispersion compensation of one or more optical signals added (e.g. at an OADM) for transmission in the system. The pre-dispersion compensation provided by the pre-dispersion compensator is preferably independent of the transmission distance. Preferably, the pre-dispersion compensation value is about -1/3 of the dispersion of a transmission span in a transmission link.

The optical transmission system may further comprise one or more post-dispersion compensator(s) for providing post-dispersion compensation of one or more optical signals being dropped (e.g. at an OADM) from transmission in the system. The post-compensation provided by the post-dispersion compensator is also preferably independent of the transmission distance.

Preferably, the overall dispersion of WDM signals transmitted in the system upon optical-to-electrical conversion (e.g. at a receiver) is about zero.

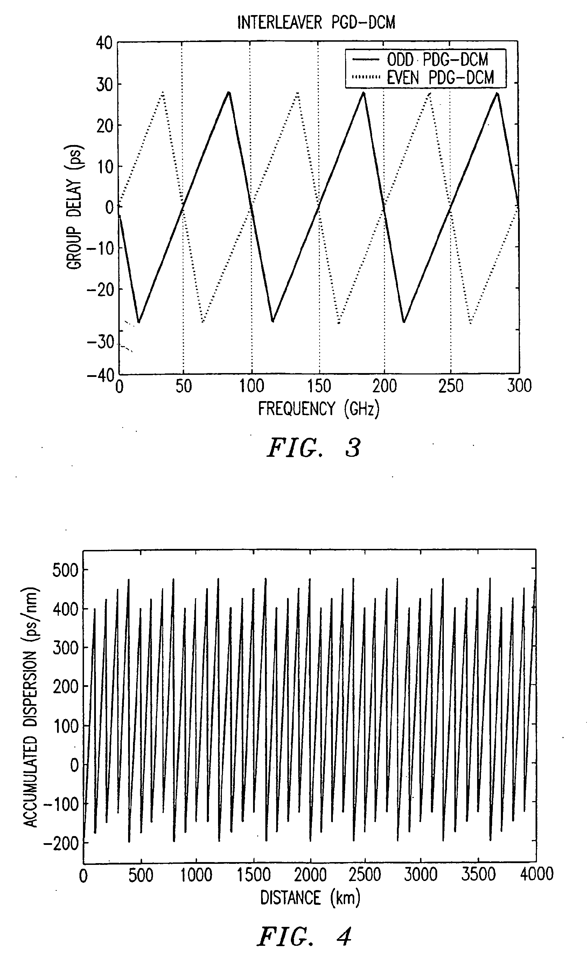

Fig. 3 graphically illustrates the group delay properties of two PGD-DCMs that can be used in the dispersion compensator apparatus 200 shown in Fig. 2. As can be understood by those skilled in the art, the DCMs are offset by 50 GHz, and the dispersion provided by each DCM within its useful passband (of~70 GHz bandwidth) is -100 ps/nm. As discussed above, several different DCM devices can be used for this purpose. These devices include phased arrays, such as the Virtual Imaged Phased Array or VIPA (see M. Shirasaki, "Chromatic-dispersion compensator using virtually imaged phased array", IEEE Phonics Technology Letters, vol. 9, pp. 1598-1600, 1997), waveguide grating router (see C. R. Doerr, *et al,* "Multichannel integrated tunable dispersion compensator employing a thermooptic lens", Technical Digest of the Optical Fiber Communication Conference OFC '02, PD FA6-2, 2002), and all-pass filters based on either ring resonators (see C. K. Madsen and G. Lenz, "Optical all-pass filters for phase response design with applications for dispersion compensation", IEEE Photonics Technology Letters, vol. 10, pp. 994-996, 1998) or based on Gires-Tournois reflective etalons (see D. J. Moss, *et al,* "Multichannel tunable dispersion compensation using all-pass multicavity etalons", Technical Digest of the Optical Fiber Communication Conference OFC '02, pp. 132-133, 2002).

Fig. 4 graphically illustrates the accumulated dispersion in a transmission link that implements multiple dispersion compensator apparatus according to embodiments of the invention and discussed above with reference to Fig. 3. The transmission link is assumed to consist of 40 100-km fiber spans with D=6 ps/km/nm. The RDPS is assumed to be 25 ps/nm. A dispersion compensator apparatus with D=-100 ps/nm is used every 4 spans to eliminate distance-dependent dispersion accumulation. The pre-dispersion compensation value (Dₚᵣₑ) is fixed at -200 ps/nm, and the overall dispersion at the receiver (D_{RX}) is fixed at 0 ps/nm.

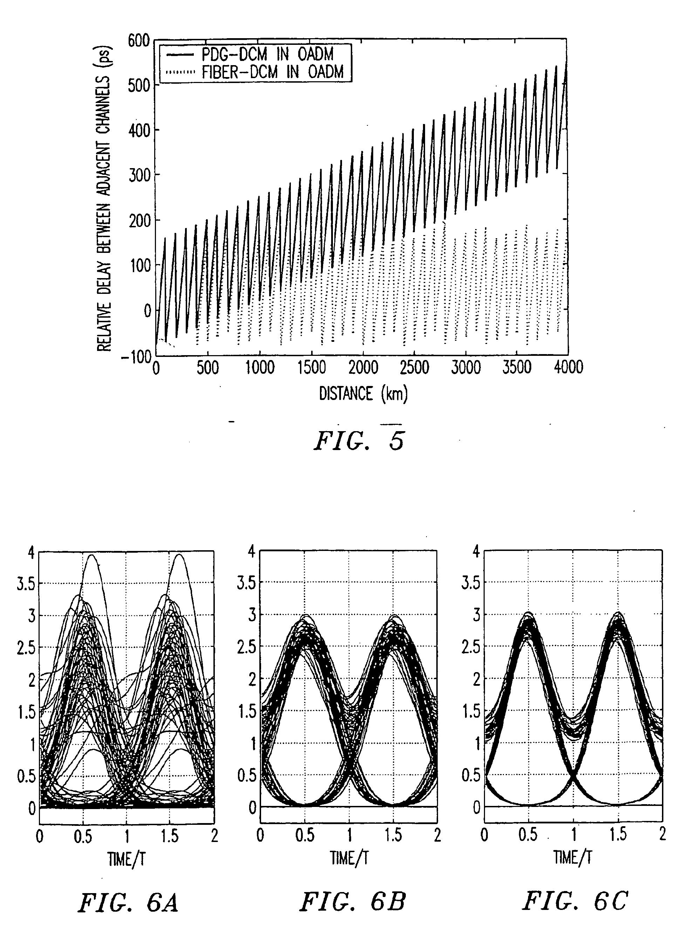

Fig. 5 graphically illustrates the relative time delay between two adjacent channels (that are 50 GHz apart) in a transmission link that implements the dispersion compensator apparatus of embodiments of the invention discussed above with reference to Fig. 4. Remarkably, the use of the dispersion compensator apparatus allows the adjacent channels to walk away quickly (by 4 bit periods after 40 spans). As a comparison, if only DCF (instead of dispersion compensator apparatus according to the invention) is used to eliminate the distance-dependent dispersion accumulation, there will be essentially no walk-off between the adjacent channels as shown as the dotted line in Fig. 5. Due to the large walk-off when dispersion compensator apparatus according to the invention are used, the inter-channel XPM penalty can be significantly reduced.

Figs. 6A-C shows the simulated eye diagrams at 4000 km in dense WDM with 10 Gbit/s RZ OOK channels spaced 50 GHz apart, with all channels co-polarized, and with no ASE, for three different dispersion maps, (1) a plain map (Fig. 6A) with RDPS=0 ps/nm, Dₚᵣₑ=-200 ps/nm, and D_{RX}=0 ps/nm, (2) a DMS map (Fig. 6B) with RDPS=25 ps/nm, Dₚᵣₑ=-200 ps/nm, and D_{RX}=600 ps/nm, and (3) a map in accordance with the invention (Fig. 6C) with RDPS=25 ps/nm, Dₚᵣₑ=-200 ps/nm, D_{PGD-DCM}=-100 ps/nm per 4 spans, and D_{RX}=0 ps/nm.

In the simulations, the transmission fiber nonlinear coefficient is assumed to be 1.3 /W/km, and its loss is 0.2 dB/km. Bi-directional Raman pumping provides 4 dB forward Raman gain and 16 dB backward Raman gain to compensate for the fiber loss. Each transmission fiber span (100km) is compensated by a DCF to obtain a certain RDPS. The DCF has a loss of 0.6 dB/km, and is backward Raman pumped to transparency. The signal powers at the beginning of the transmission fiber and the DCF are -5 dBm and -9 dB per channel, respectively. A total of 10 WDM channels with 50-GHz spacing are simulated, and the eye diagrams shown are for the 5-th channel. When the dispersion compensator apparatus is used, it is preferably used every 4 spans. Evidently, the timing-jitter for the plain map with zero RDPS is so large that the eye is almost completely closed. The DMS map gives better performance, but the optimal D_{RX} after 4000 km transmission is ~600 ps/nm, which is large and distance-dependent. The best transmission performance is achieved by systems using dispersion compensator apparatus and having the map according to the present invention.

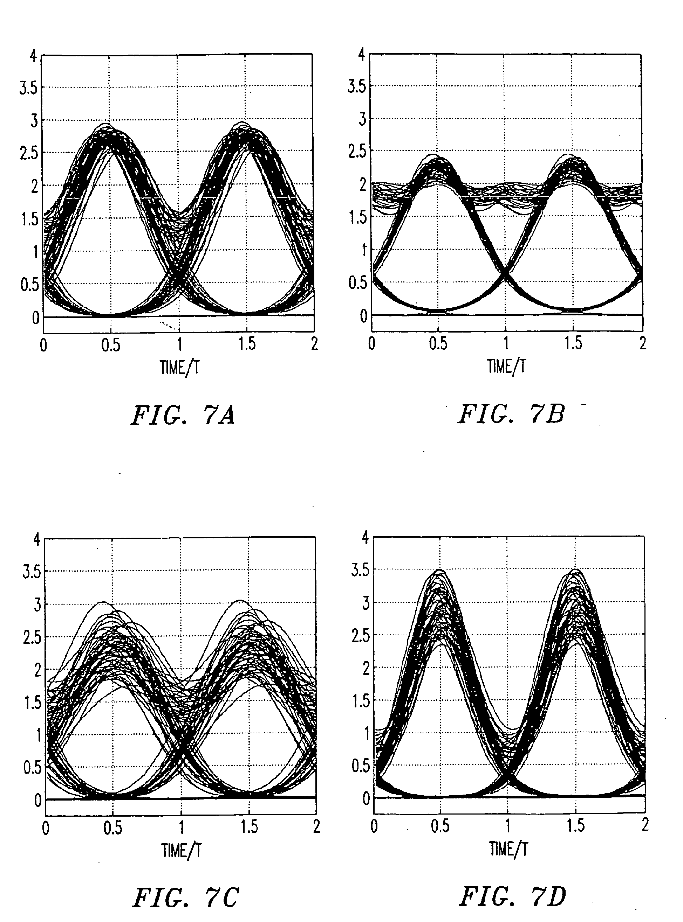

In real systems, the RDPS may not be identical for all the WDM channels due to the imperfect dispersion-slope matching between the transmission fiber and the DCF. It is important to assess the transmission performance under different RDPS values. Figs. 7A-D show the simulated eye diagrams at 4000 km in dense WDM with 10 Gbit/s RZ-OOK channels spaced 50 GHz apart, with all channels co-polarized, with no ASE, and with RDPS= 20 ps/nm (Figs. 7 A, B) and RDPS=30 ps/nm (Figs. 7 C, D), for the DMS map (Figs. 7A, C) with Dₚᵣₑ=-200 ps/nm, and D_{RX}=600 ps/nm, and the dispersion map in accordance with the invention with Dₚᵣₑ=-200 ps/nm, D_{PGD-DCM}=-100 ps/nm per 4 spans, and D_{RX}=0 ps/nm (Figs. 7B, D). Again, the system with dispersion compensator apparatus and a dispersion map in accordance with the invention is found to outperform the DMS systems for all the RDPS values.

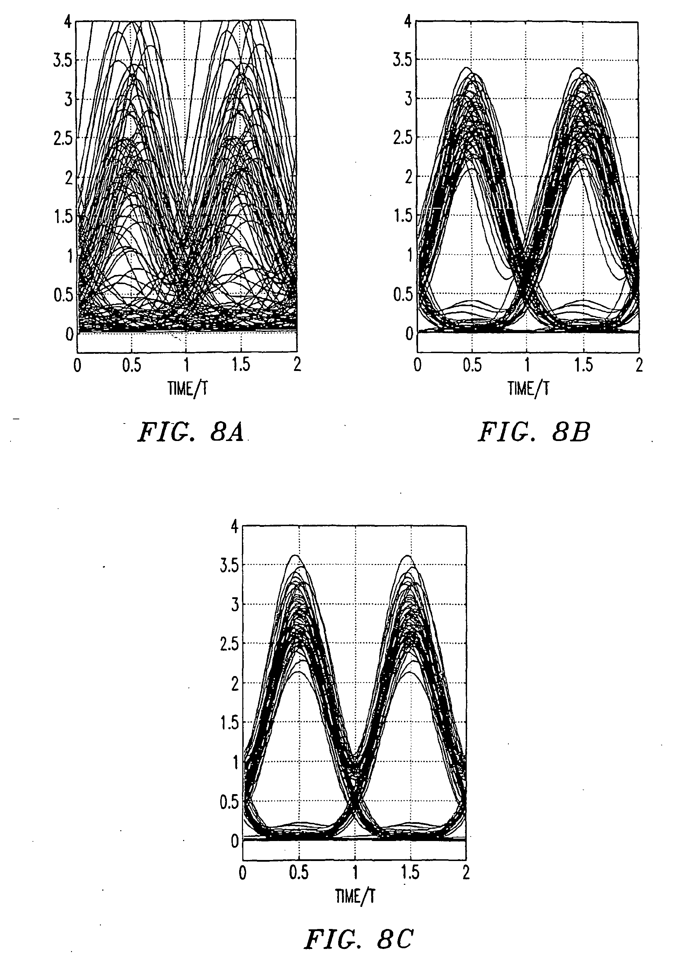

It is also important to ensure that the dispersion map for systems according to the invention also allows good transmission performance for 40-Gb/s signals. Fig. 8 shows the simulated eye diagrams at 1600 km for dense WDM, 40 Gbit/s, carrier-suppressed RZ (CSRZ) OOK transmission, with channels spaced 100 GHz apart, with all channels co-polarized, with no ASE, for the three different dispersion maps also used in Fig. 6. The timing-jitter for the plain map (Fig. 7A) is again so large that the eye is almost closed. The DMS map (Fig. 7B) gives better performance, but the IFWM (by producing "ghost pulses") causes >3 dB nonlinear penalty. The nonlinear penalty in the system using the dispersion compensator apparatus and map in accordance with the invention (Fig. 7C) is <2 dB.

The dispersion map for systems in accordance with the invention is also found to outperform a conventional "symmetric" dispersion map (in which the |Dₚᵣₑ| increases with the increase of distance so that the distance-dependent dispersion excursion is "symmetric" about zero) by reducing the IFWM penalty. Furthermore, the dispersion map for systems in accordance with the invention is robust against the variation of RDPS in 40-Gb/s transmissions.

Since the XPM is much stronger between co-polarized channels than between orthogonally polarized channels, the inter-channel XPM penalty between the even channels and the odd channels can be further reduced by rotating the relative polarization between the two groups. This can be achieved in dispersion compensator apparatus according to the invention by inserting a polarization controller (PC) in one or more of the two paths (i.e. the even channel path or the odd channel path).

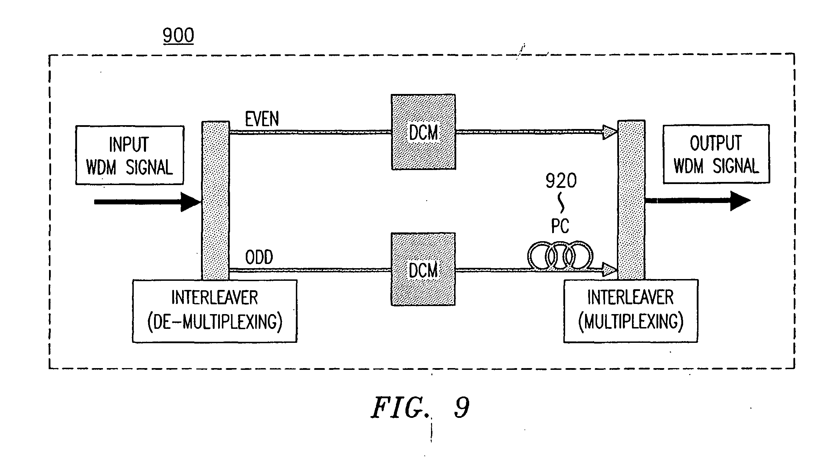

Fig. 9 shows a block diagram of a dispersion compensator apparatus 900 according to another embodiment of the invention with a PC 920. The dispersion compensator apparatus 900 functions in a similar manner to the dispersion compensator apparatus discussed above with reference to Fig. 2. The addition of the polarization controller 920 can provide a significant increase in system performance. Assuming the relative polarization between the even channels and the odd channels are rotated by 45 degrees at each dispersion compensator apparatus used in a system, the power (nonlinear) tolerance is found to be increased by ~1dB. The PC 920 can be a simple fiber PC, a polarization scrambler, or the like.

It is understood that the relative time delay between the even channels and the odd channels in each dispersion compensator apparatus may not be exactly the same in actual commercial implementations. In effect, the random time offsets between the even and odd channels at different dispersion compensator apparatus in a system further scramble the collisions between two groups and cause the timing jitters to add up more randomly. Thus, the overall assessment of the transmission performance in systems with a dispersion map in accordance with the invention predicted by simulations is valid.

Those skilled in the art will appreciate that the dispersion compensator apparatus 200 of Fig. 2 can be naturally implemented within an OADM, such as the OADM 1000 shown in Fig. 10. An integrated apparatus would effectively combine the interleavers 1012, 1032 of the OADM 1000 of Fig. 10 and the interleavers 212, 232 of the dispersion compensator apparatus 200.

As can be understood from Fig. 10 the OADM 1000 is a six-port device including a main input port 1002, a main output port 1004, two drop ports 1006a-b, and two add ports 1008a-b.

OADM 1000 operates by directing WDM signals applied to main input port 1002 through a first interleaver 1012, which de-interleaves the input WDM channels into even channels and odd channels, which are offset in frequency by the minimum channel spacing of the WDM channels. The odd and even channels are output from the interleaver at a first output port 1012a and a second output port 1012b, respectively, or vice versa. The odd and even channels are routed to drop ports 1006a-b through splitters 1014a-b, e.g., for distribution to local receivers, or main output port 1004, (e.g., for further transmission over the network). The signals dropped at drop ports 1006a-b are blocked from reaching main output port 1004 using wavelength blockers 1016a-b.

Some or all of the previously unused WDM channels and/or WDM channels corresponding to the dropped signals may then be used to transmit optical signals-applied to add ports 1008a-b, e.g., from local transmitters.

Optical signals applied to add ports 1008a-b are combined using combiners 1034a-b with optical signals received at main input port 1002 that are not dropped at drop ports 1006a-b.

Optical signals received at ports 1032a and 1032b (i.e. even channels and odd channels, respectively) are interleaved using a second interleaver 1032 and output at main output port 1004.

DCMs 1015a and 1015b, similar to DCMs discussed above with reference to Fig. 2, are preferably coupled between the first and second interleavers 1012 and 1032 as shown in Fig. 10, for providing dispersion compensation for one or more of the even or odd channels of the WDM signal 1002.

Although the present invention has been described in accordance with the embodiments shown, one of ordinary skill in the art will readily recognize that there could be variations to the embodiments and those variations would be within scope of the present invention. Accordingly, many modifications may be made by one of ordinary skill in the art without departing from the scope of the appended claims.

## Claims

1. A dispersion compensator apparatus comprising:
a first interleaver (212) for de-interleaving even and odd channels of a WDM signal (202) onto a first output port and a second output port, respectively;
the dispersion compensator apparatus being **CHARACTERIZED by**
a first dispersion compensation module, DCM, (215a) coupled to the first output port, and a second DCM (215b) coupled to the second output port, wherein (i) the first DCM and the second DCM are each a periodic-group-delay, PGD, DCM for providing dispersion compensation for those of the channels of the WDM signal supplied thereto, wherein the first DCM and the second DCM are PGD-DCMs, (ii) the first and second DCMs have substantially the same period and their passbands are offset by about one-half of the period, and (iii) the center frequency of each of the passbands of the first DCM is aligned with a respective one of the center frequencies of the even channels and the center frequency of each of the passbands of the second DCM is aligned with a respective one of the center frequencies of the odd channels; and
a second interleaver (232) coupled to the first and second DCMs for interleaving the dispersion compensated even and odd channels of the WDM signal.

2. The apparatus according to claim 1, wherein the useful bandwidth of each passband of each of said first and second DCMs is greater than the spacing between said center frequencies of adjacent ones of said odd and even channels.

3. The apparatus according to claim 10, wherein the useful bandwidth of each passband of each of the first and second PGD-DCMs is greater than the spacing between the center frequencies of adjacent ones of the odd and even channels.

4. The apparatus according to claim 1, wherein at least one of the first DCM and the second DCM is integrated with at least one of the first interleaver or the second interleaver to provide group-delay ripple compensation and dispersion compensation.

5. The apparatus according to claim 1, further comprising a polarization controller (920) coupled between the first interleaver and the second interleaver to control the polarization of at least one of the even or odd channels of the WDM signal.

6. An optical transmission system comprising:
a plurality of dispersion compensation apparatus of claim 1 for distributed dispersion compensation at a plurality of dispersion compensation module, DCM, nodes in the transmission system.

7. The system according to claim 6, wherein each dispersion compensation apparatus in a DCM node is adapted to compensate for the dispersion accumulated in a transmission link from a previous DCM node.

8. The system according to claim 7 wherein each dispersion compensation apparatus fully compensates for the accumulated dispersion in the transmission link.

9. The system according to claim 6 wherein one or more of the DCM nodes is an optical-add-drop-multiplexer node.

10. A method for dispersion compensation comprising:
de-interleaving even and odd channels of a DWDM signal;
dispersion compensating at least one or more of the even and at least one or more of the odd channels of the DWDM signal using a first periodic-group-delay, PGD, dispersion compensator module, DCM, and a second PGD-DCM, wherein the first and second PGD-DCMs have substantially the same period and their passbands are offset by about one-half of that period, and the center frequency of each of the passbands of the first PGD-DCM is aligned with a respective one of the center frequencies of the even channels and the center frequency of each of the passbands of the second PGD-DCM is aligned with a respective one of the center frequencies of the odd channels; and
interleaving the dispersion compensated even and odd channels of the DWDM signal.

## Patentansprüche

1. Dispersionskompensatorvorrichtung mit folgendem:
einem ersten Verschachteler (212) zum Entschachteln von gerad- und ungeradzahligen Kanälen eines WDM-Signals (202) auf einen ersten Ausgangsanschluß bzw. einen zweiten Ausgangsanschluß;
**gekennzeichnet durch** folgendes:
ein erstes, an den ersten Ausgangsanschluß angekoppeltes Dispersionskompensationsmodul DCM (215a) und ein zweites, an den zweiten Ausgangsanschluß angekoppeltes DCM (215b), wobei (i) das erste DCM und das zweite DCM jeweils ein DCM mit periodischer Gruppenlaufzeit PGD zur Bereitstellung von Dispersionskompensation für diejenigen der Kanäle des zugelieferten WDM-Signals sind, wobei das erste DCM und das zweite DCM PGD-DCM sind, (ii) das erste und zweite DCM im wesentlichen die gleiche Periode aufweisen und
ihre Paßbänder um rund die Hälfte der Periode versetzt sind, und (iii) die Mittenfrequenz jedes der Paßbänder des ersten DCM auf eine jeweilige der Mittenfrequenzen der geradzahligen Kanäle ausgerichtet ist und die Mittenfrequenz jedes der Paßbänder des zweiten DCM auf eine jeweilige der Mittenfrequenzen der ungeradzahligen Kanäle ausgerichtet ist; und
einen an den ersten und zweiten DCM angekoppelten zweiten Verschachteler (232) zum Verschachteln der dispersionskompensierten gerad- und ungeradzahligen Kanäle des WDM-Signals.

2. Vorrichtung nach Anspruch 1, wobei die Nutzbandbreite jedes Paßbandes jedes der ersten und zweiten DCM größer als der Abstand zwischen den Mittenfrequenzen benachbarter der ungerad- und geradzahligen Kanäle ist.

3. Vorrichtung nach Anspruch 10, wobei die Nutzbandbreite jedes Paßbandes jedes der ersten und zweiten PGD-DCM größer als der Abstand zwischen den Mittenfrequenzen benachbarter der ungerad- und geradzahligen Kanäle ist.

4. Vorrichtung nach Anspruch 1, wobei mindestens einer des ersten DCM und des zweiten DCM mit mindestens einem des ersten Verschachtelers oder des zweiten Verschachtelers integriert ist, um Gruppenlaufzeit in Variationskompensation und Dispersionskompensation bereitzustellen.

5. Vorrichtung nach Anspruch 1, weiterhin mit einer zwischen den ersten Verschachteler und den zweiten Verschachteler eingekoppelten Polarisationssteuerung (920) zum Steuern der Polarisation mindestens eines der gerad- oder ungeradzahligen Kanäle des WDM-Signals.

6. Optisches Übertragungssystem mit folgendem:
einer Mehrzahl von Dispersionskompensationsvorrichtungen nach Anspruch 1 zur verteilten Dispersionskompensation an einer Mehrzahl von DCM-Knoten (dispersion compensation module) im Übertragungssystem.

7. System nach Anspruch 6, wobei jede Dispersionskompensationsvorrichtung in einem DCM-Knoten zum Kompensieren der in einer Übertragungsstrecke von einem vorhergehenden DCM-Knoten angesammelten Dispersion eingerichtet ist.

8. System nach Anspruch 7, wobei jede Dispersionskompensationsvorrichtung die angesammelte Dispersion in der Übertragungsstrecke voll kompensiert.

9. System nach Anspruch 6, wobei einer oder mehrere der DCM-Knoten ein optischer Add/Drop-Multiplexerknoten ist.

10. Verfahren zur Dispersionskompensation mit folgendem:
Entschachteln von gerad- und ungeradzahligen Kanälen eines DWDM-Signals;
Dispersionskompensieren an mindestens einem oder mehreren der geradzahligen und mindestens einem oder mehreren der ungeradzahligen Kanäle des DWDM-Signals unter Verwendung eines ersten Dispersionskompensationsmoduls mit periodischer Gruppenlaufzeit PGD-DCM und eines zweiten PGD-DCM, wobei das erste und zweite PGD-DCM im wesentlichen die gleiche Periode aufweisen und ihre Paßbänder um rund die Hälfte dieser Periode versetzt sind, und die Mittenfrequenz jedes der Paßbänder des ersten PGD-DCM auf eine jeweilige der Mittenfrequenzen der geradzahligen Kanäle ausgerichtet ist und die Mittenfrequenz jedes der Paßbänder des zweiten PGD-DCM auf eine jeweilige der Mittenfrequenzen der ungeradzahligen Kanäle ausgerichtet ist; und
Verschachteln der dispersionskompensierten geradzahligen und ungeradzahligen Kanäle des DWDM-Signals.

## Revendications

1. Appareil de compensation de dispersion comprenant :
un premier entrelaceur (212) pour désentrelacer des canaux pairs et impairs d'un signal WDM (202) dans un premier port de sortie et un second port de sortie, respectivement ;
l'appareil de compensation de dispersion étant **CARACTERISE par**
un premier module de compensation de dispersion, DCM, (215a) couplé au premier port de sortie, et un second DCM (215b) couplé au second port de sortie, dans lequel (i) le premier DCM et le second DCM sont chacun un DCM de temps de propagation de groupe périodique, PGD, pour fournir une compensation de dispersion à ceux des canaux du signal WDM procurés à celui-ci, dans lequel le premier DCM et le second DCM sont des DCM-PGD, (ii) les premier et second DCM ont pratiquement la même période et leurs bandes passantes sont décalées environ d'une moitié de la période, et (iii) la fréquence centrale de chacune des bandes passantes du premier DCM est alignée avec une fréquence respective des fréquences centrales des canaux pairs et la fréquence centrale de chacune des bandes passantes du second DCM est alignée avec une fréquence respective des fréquences centrales des canaux impairs ; et
un second entrelaceur (232) couplé aux premier et second DCM pour entrelacer les canaux pairs et impairs compensés en dispersion du signal WDM.

2. Appareil selon la revendication 1, dans lequel la largeur de bande utile de chaque bande passante de chacun desdits premier et second DCM est supérieure à l'espacement entre lesdites fréquences centrales des canaux adjacents desdits canaux impairs et pairs.

3. Appareil selon la revendication 10, dans lequel la largeur de bande utile de chaque bande passante de chacun des premier et second DCM-PGD est supérieure à l'espacement entre les fréquences centrales de canaux adjacents desdits canaux impairs et pairs.

4. Appareil selon la revendication 1, dans lequel au moins un du premier DCM et du second DCM est intégré avec au moins un du premier entrelaceur ou du second entrelaceur pour fournir une compensation d'ondulation de temps de propagation de groupe et une compensation de dispersion.

5. Appareil selon la revendication 1, comprenant en outre un contrôleur de polarisation (920) couplé entre le premier entrelaceur et le second entrelaceur pour commander la polarisation d'au moins un des canaux pairs ou impairs du signal WDM.

6. Système de transmission optique comprenant :
une pluralité d'appareils de compensation de dispersion selon la revendication 1 pour une compensation de dispersion distribuée au niveau d'une pluralité de noeuds de module de compensation de dispersion, DCM, dans le système de transmission.

7. Système selon la revendication 6, dans lequel chaque appareil de compensation de dispersion dans un noeud DCM est apte à compenser la dispersion cumulée dans une liaison de transmission provenant d'un noeud DCM précédent.

8. Système selon la revendication 7 dans lequel chaque appareil de compensation de dispersion compense totalement la dispersion cumulée dans la liaison de transmission.

9. Système selon la revendication 6 dans lequel un ou plusieurs des noeuds DCM est un noeud de multiplexeur d'insertion-extraction optique.

10. Procédé pour une compensation de dispersion comprenant:
un désentrelacement de canaux pairs et impairs d'un signal DWDM ;
une compensation de dispersion d'au moins un ou plusieurs des canaux pairs et d'au moins un ou plusieurs des canaux impairs du signal DWDM à l'aide d'un premier module de compensation de dispersion, DCM, de temps de propagation de groupe périodique, PGD, et d'un second DCM-PGD, dans lequel les premier et second DCM-PGD ont pratiquement la même période et leurs bandes passantes sont décalées environ d'une moitié de cette période, et la fréquence centrale de chacune des bandes passantes du premier DCM-PGD est alignée avec une fréquence respective des fréquences centrales des canaux pairs et la fréquence centrale de chacune des bandes passantes du second DCM-PGD est alignée avec une fréquence respective des fréquences centrales des canaux impairs ; et
un entrelacement des canaux pairs et impairs compensés en dispersion du signal DWDM.
